# EUROPEAN PATENT APPLICATION

(11) **EP 4 844 225 A1**
(43) Date of publication of application: **25.11.2026**
(21) Application number: 24925678.5
(22) Date of filing: 20.02.2024
(51) Int. Cl.: F03D 13/10, F03D 1/06

(54) **METHOD FOR ASSEMBLING BLADES AND COUNTERWEIGHTS**

(71) Applicant: Nabrawind Technologies, S.L., 31002 Pamplona (ES)
(72) Inventor: AROCENA DE LA RÚA, Jon, 31001 Pamplona (ES); SANZ PASCUAL, Eneko, 31002 Pamplona (ES)
(86) International application number: PCT/ES2024/070096
(87) International publication number: WO 2025/176918

(57) **Abstract**

The present invention relates to a method for assembling blades
and counterweights on a direct drive wind turbine, characterised in that both the blades (3) and the counterweights, either passive (4) or active (9), are vertically lifted and lowered from the ground to the hub (2) by means of cables (5) that are controlled by a lifting and lowering mechanism provided inside the hub (2). The invention is also characterised in that the assembly method is combined with a wind turbine self-hoisting system. Firstly, prior to hoisting the assembly, a tower segment (1), a nacelle, a rotor (2) and the counterweights (4, 9) are mounted and then new tower segments are introduced through the bottom portion, to finish mounting the blades (3) in three consecutive steps.

## Description

### FIELD OF THE INVENTION

The present invention relates to a method for assembling blades without the use of large auxiliary cranes, and to the counterweights used to maintain the rotor balanced during the assembly process.

### BACKGROUND OF THE INVENTION

The assembly of a wind turbine begins with erection of the tower, followed by installation of the nacelle and the hub, and finally installation of the blades. When the blades are mounted one by one, an imbalance is created in the rotor. To counteract this imbalance, counterweights are used and the rotor is rotated in order to position the successive blades, usually with the assistance of an auxiliary crane.

The prior art discloses different solutions concerning the use of counterweights.

Patent WO03012291A1 discloses mounting three counterweights on the hub, blocking one of them in a lateral position, removing it and installing a first blade. The rotor is rotated until another counterweight is in a lateral position and is again replaced by a blade. The assembly is completed using the same procedure. The counterweight is formed by different masses that can be added or removed so that the combined moment acting on the rotor is always zero.

Patent WO2014076825A1 discloses mounting first a counterweight and a blade. The counterweight is articulated and, by moving its mass and rotating the rotor, the centre of gravity of the counterweight is positioned in the circumferential direction of the rotor. The second blade is then coupled. The counterweight comprises a movable internal mass and a hydraulic articulated joint system.

Further developments are disclosed in US2016090962A1, US2019085818A1 and CN114321276A, wherein counterweights include articulated structures, telescopic beams, or refillable tanks for adjusting mass.

A common feature of blade assembly using counterweights in the prior art is that the blades are mounted in a horizontal position with the assistance of an auxiliary crane.

The lifting of blades in direct drive wind turbines, in which the rotor cannot be freely rotated during assembly and where the use of large auxiliary cranes is not possible or not desired, remains an unresolved technical problem.

### SUMMARY OF THE INVENTION

The object of the invention is to develop a method that enables installation of the blades of a "direct drive" wind turbine using counterweights and a blade lifting and lowering system located inside the hub.

For this purpose, both the counterweights and the blades are arranged on the ground adjacent the wind turbine tower.

Using the lifting system located inside the hub and cables passing through the opening where the blade root is anchored, the counterweights and the blades are lifted.

Each time an element is lifted, the hub is rotated so that a new blade opening is correctly oriented in the lower horizontal position for the subsequent lifting operation.

Firstly, the counterweights are lifted, each formed by a steel support and a concrete block.

Thereafter, the blades are lifted and, as the second and third blades are lifted, their corresponding counterweights are lowered.

Active counterweights may also be used, said active counterweights modifying the centre of gravity of the rotor by means of articulated joint. Counterweights may also be used in which the mass is formed by a reservoir that can be filled with liquid in order to vary the balance of the rotor.

The use of such active counterweights may reduce their number and the number of assembly steps.

All lifting operations are carried out vertically and without the use of large external cranes.

The method provides, inter alia, the following advantages:
- Assembly under wind conditions of up to 15 m/s, compared to limitations of 7-9 m/s for assembly of complete rotors in this type of "direct drive" wind turbine.
- Reduction of costs associated with cranes and auxiliary equipment.

### BRIEF DESCRIPTION OF THE DRAWINGS

A brief description will be given below for a series of drawings useful for better understanding the invention and that expressly relate to an embodiment of said invention that is presented as a non-limiting example thereof.
Figure 1 shows the assembly stages using two passive counterweights.
Figure 2 shows a schematic of a passive counterweight.
Figure 3 shows the assembly stages using a single active counterweight.
Figure 4 shows a practical embodiment with passive counterweights mounted on the ground before self-hoisting of the wind turbine.
Figure 5 shows another practical embodiment with an active counterweight mounted on the ground before self-hoisting.

### DETAILED DESCRIPTION OF THE INVENTION

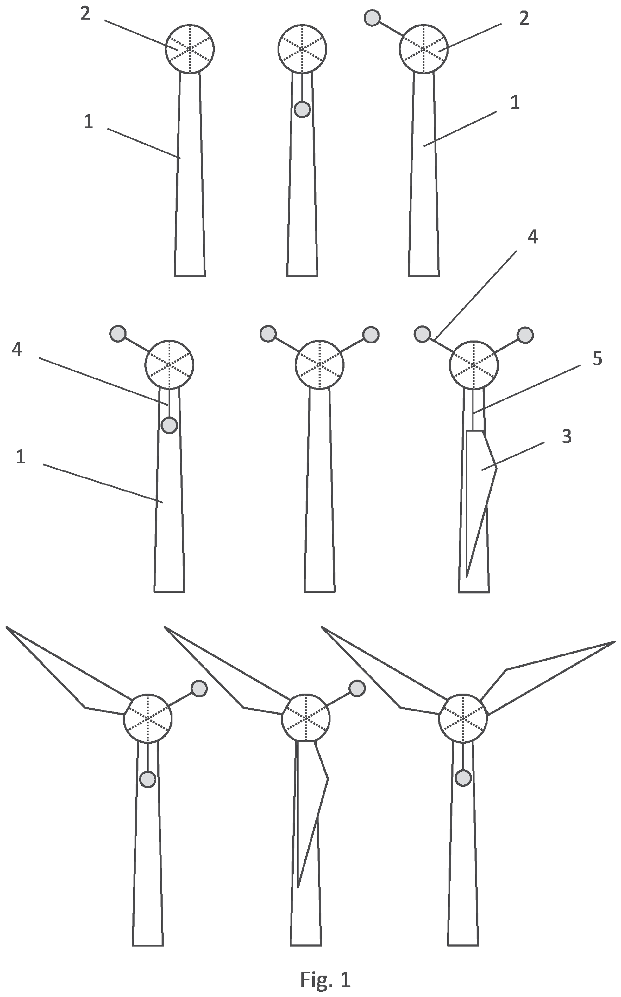

As shown in Figure 1, the wind turbine comprises a tower (1), a nacelle and a hub (2), to which blades (3) are added to complete assembly.

The blades (3) are mounted one by one and, due to their weight, an imbalance is created in the hub (2) when the rotor rotates. To counteract this imbalance, counterweights (4) are used during assembly and the hub (2) is rotated to position successive blades (3). All elements are initially arranged on the ground near the tower (1).

The method comprises the following steps:
- A blade lifting/lowering system with hoists and cables is installed inside the hub (2).
- The lifting/lowering system lifts a first counterweight (4), which is fixed to the hub (2) at a 180° position.
- The hub (2) is rotated, using the wind turbine generator or special tooling installed on the wind turbine shaft, until the counterweight (4) is positioned at an angular position of 300°, and is fixed by means of the rotor locking system.
- A second counterweight is lifted and fixed at a 180° position, and the hub (2) is rotated a further 120°, leaving the hub opening in the lower horizontal position.
- The lifting/lowering system comprises cables (5) anchored to the blade root and lifting the blade vertically.
- Once the first blade (3) is fixed, the hub is rotated 120° and the first counterweight (4) is lowered, leaving the hub opening where the counterweight was fixed in the lower horizontal position. The second blade (3) is then lifted and fixed to the rotor.
- The process of rotating the hub, lowering the counterweight and lifting the third blade is repeated, thereby completing blade assembly in three consecutive steps.

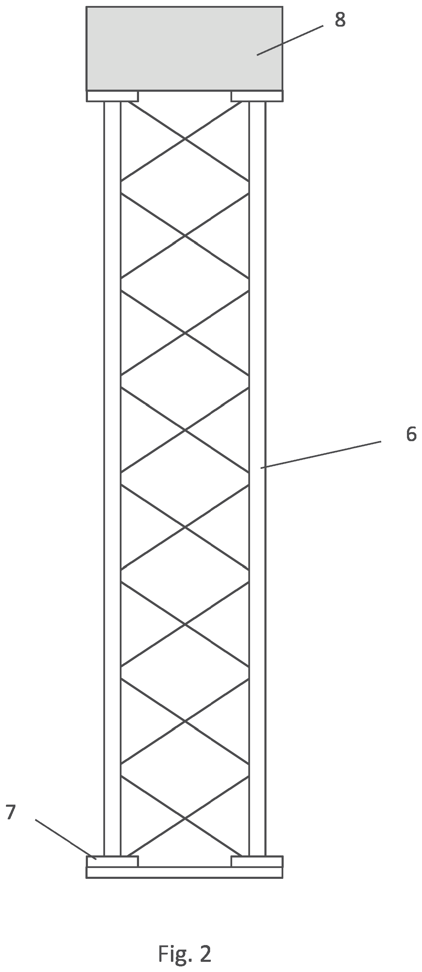

As shown in Figure 2, the counterweight (4) comprises a steel metallic support (6) having two ends: one end provided with anchoring means (7) for fixing to the hub (2), and an opposite end provided with a mass (8), preferably made of concrete, in the form of a block.

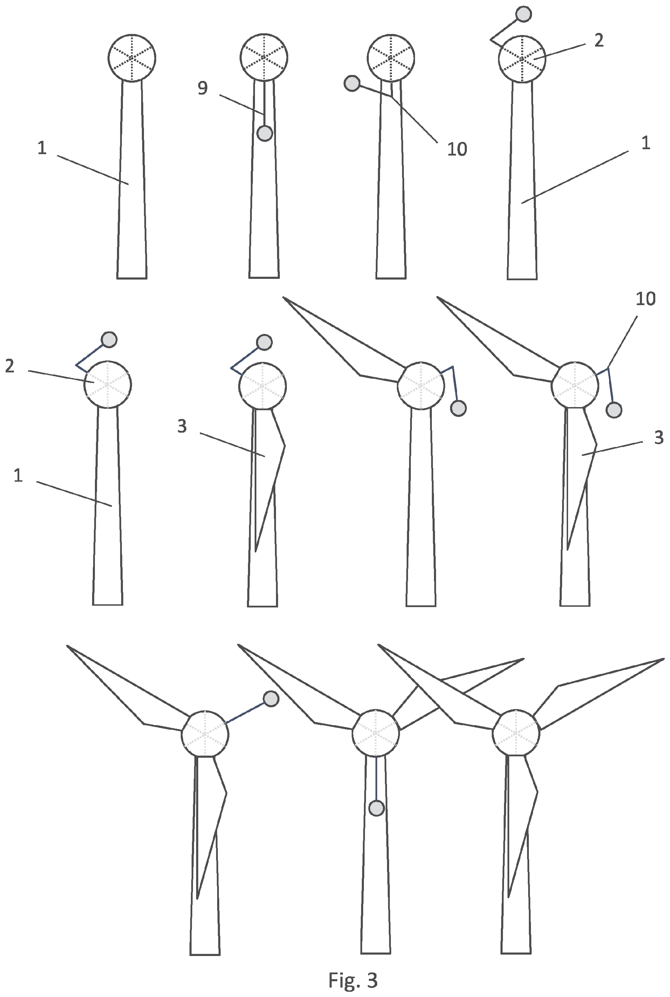

As shown in Figure 3, in an alternative embodiment the two passive counterweights (4) are replaced by a single active counterweight (9).

The active counterweight (9) comprises a metallic structure (6) with an articulated joint (10) and an active element allowing movement of the articulated joint during assembly to balance the centre of gravity of the rotor.

The process comprises:
- Lifting the active counterweight (9) and fixing it to the hub (2) at a 180° position.
- Moving the counterweight (9) by means of its articulated joint (10) and rotating the hub (2) until the counterweight (9) is positioned at an angular position of 300° and locking the rotor.
- Lifting the first blade (3), rotating the hub (2) 120° and lifting the second blade (3).
- Returning the active counterweight (9) to its original straight position, rotating the hub 120° and lowering the counterweight (9) while lifting the third blade (3).

In another embodiment, the mass (8) of the counterweights (4, 9) is formed by a refillable reservoir that may be filled with fluid or solid mass portions in order to vary the balancing of the rotor.

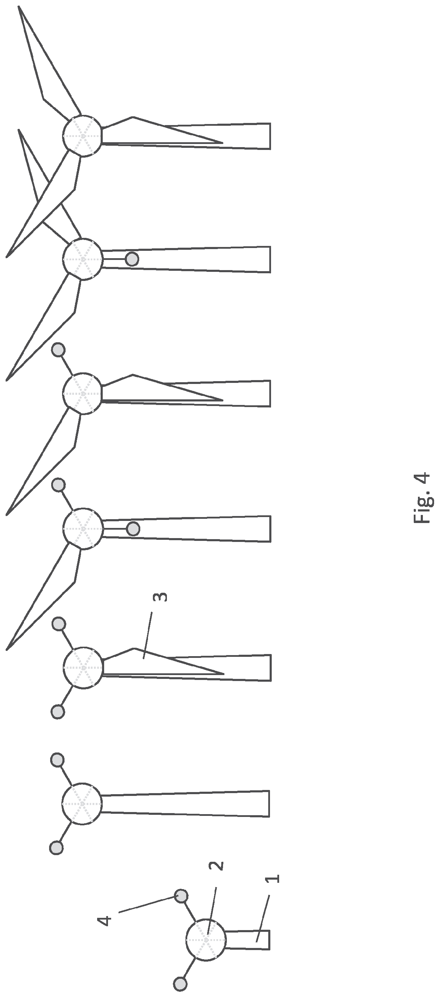

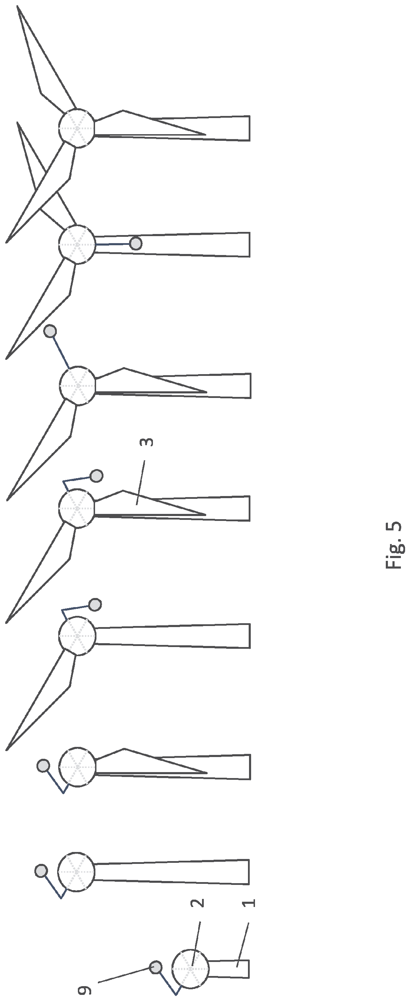

Figures 4 and 5 show an assembly process in which a self-hoisting system is used to elevate the first tower section (1), the nacelle and the hub (2), and to introduce additional tower sections from below until the final tower is completed.

As shown in Figure 4, the two passive counterweights (4) are mounted using a small auxiliary crane at the same time as the first tower section (1), the nacelle, and the hub (2). These counterweights (4) do not interfere with the self-hoisting system surrounding the initial assembly, and the assembly thus formed is raised, with new tower sections (1) being inserted from below.

As shown in Figure 5, the active counterweight (9) is mounted and rotated simultaneously with the first tower section (1), the nacelle, and the hub (2). This counterweight (9) does not interfere with the self-hoisting system, and the assembly thus formed is raised, with new tower sections (1) being inserted from below.

Once the assembly of the wind turbine has been completed, the blades (3) are lifted as explained in figures 1 and 3.

## Claims

1. A method for assembling blades and counterweights on a hub (2) of a wind turbine supported on a tower (1) or a first tower section (1), the hub comprising an internal lifting/lowering system, rotation means and a rotor locking system, **characterised in that**:
- before commencing installation of the blades (3), at least one counterweight (4, 9) is installed to balance the rotor during subsequent assembly phases;
- the blades (3) are installed from the ground in a vertical direction using cables (5) of the lifting system passing through the blade root openings, completing assembly in three consecutive steps;
- each time a blade (3) is installed, the hub (2) is rotated 120° using the wind turbine generator or special tooling installed on the wind turbine shaft, and is fixed by means of the rotor locking system;
- when the counterweight (4, 9) is positioned at 180°, it is lowered vertically using the cables (5) of the lowering system before lifting a new blade (3) using the same system in lifting mode.

2. A method for assembling blades and counterweights according to claim 1, wherein two counterweights (4) are used, a first counterweight being installed, the hub (2) being rotated 120° and a second counterweight being installed, the hub being rotated a further 120° before commencing blade installation, each counterweight comprising a steel metallic support (6) having one end provided with anchoring means (7) for fixing to the hub (2) and an opposite end provided with a block-shaped mass (8).

3. A method for assembling blades and counterweights according to claim 1, wherein a single counterweight (9) is used, said counterweight comprising a metallic support (6) with an articulated joint (10) and an active element configured to move the articulated joint during assembly so as to balance the centre of gravity of the rotor, the counterweight having one end provided with anchoring means (7) for fixing to the hub (2) and an opposite end provided with a block-shaped mass (8), and wherein, once mounted, the counterweight (9) is articulated and rotated 120° to commence blade (3) installation.

4. A method for assembling blades and counterweights according to any preceding claim, wherein the mass (8) is formed by a reservoir that can be filled with liquid in order to vary the balancing of the rotor.

5. A method for assembling blades and counterweights according to any preceding claim, wherein the counterweights are mounted with an auxiliary crane during assembly of the first tower section (1), the nacelle and the hub (2), a self-hoisting system being subsequently installed around the assembly without interfering with the counterweights (4, 9), the assembly being hoisted while introducing new tower sections from below, and the hub (2) subsequently being rotated and the blades (3) installed in three consecutive steps.
